(19) Europäisches Patentamt
European Patent Office
Office européen des brevets

(11) Veröffentlichungsnummer : **0 343 422 B1**

(12) **EUROPÄISCHE PATENTSCHRIFT**

(45) Veröffentlichungstag der Patentschrift : **05.10.94 Patentblatt 94/40**

(51) Int. Cl.$^5$ : **G11B 5/704,** G11B 5/84, G03C 1/76

(21) Anmeldenummer : **89108279.4**

(22) Anmeldetag : **09.05.89**

(54) **Verfahren zur Herstellung eines Aufzeichnungsträgers.**

(30) Priorität : **21.05.88 DE 3817446**

(43) Veröffentlichungstag der Anmeldung : **29.11.89 Patentblatt 89/48**

(45) Bekanntmachung des Hinweises auf die Patenterteilung : **05.10.94 Patentblatt 94/40**

(84) Benannte Vertragsstaaten : **DE FR GB**

(56) Entgegenhaltungen :
**EP-A- 72 540**
**EP-A- 283 273**
**EP-A- 304 153**
**DE-A- 2 721 787**
**DE-A- 3 014 925**
**GB-A- 2 166 666**

(56) Entgegenhaltungen :
**CHEMICAL ABSTRACTS, vol. 108, no. 12, 21. März 1988, Columbus Ohio, USA, Seite 58; linke Spalte; ref. no. 95739H & JP-A-62174227 (NIPPON OIL CO LTD) 31. Kuli 1987**

(73) Patentinhaber : **BASF Magnetics GmbH**
**Dynamostrasse 3**
**D-68165 Mannheim (DE)**

(72) Erfinder : **Zeroni, Ludwig**
**Nelkenstrasse 40**
**D-8012 Ottobrunn (DE)**
Erfinder : **Klose, Gustav**
**Dachauer Strasse 314**
**D-8000 München 50 (DE)**

(74) Vertreter : **Langfinger, Klaus-Dieter, Dr. et al**
**BASF Aktiengesellschaft,**
**Patentabteilung ZDX - C 6**
**D-67056 Ludwigshafen (DE)**

**EP 0 343 422 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Aufzeichnungsträgers, bestehend aus einem flexiblen bandförmigen Schichtträger sowie einer oder mehreren darauf gegossenen fotografischen oder magnetischen Schichten sowie gegebenenfalls einer oder mehreren Schichten auf der anderen Seite des Schichtträgers, wobei der Schichtträger im wesentlichen aus einer oder mehreren thermotropen Polymeren besteht, ausgewählt aus thermotropen Polyester, Polythioester, Polyesteramid, Polyesteramidimid und/oder Polyestercarbonat.

Verfahren der genannten gattungsgemäßen Art sind an sich bekannt. So hat sich die EP-A 0 304 153 als Aufgabe gesetzt, durch Abmischung von LCP (flüssigkristallinen Polymeren) mit konventionellen "host polymers" das gewünschte Rauhigkeitsprofil eines mit der Mischung hergestellten Schichtträgers einzustellen. Das Mischungsverhältnis beinhaltet 0,04 - 80 % LCP, vorzugsweise 0,04 - 3 % LCP.

Die EP-A 0 283 273 beschreibt ein Herstellungsverfahren für einen aus LCP bestehenden Schichtträger, bei welchem die LCP-Lösung auf eine teflonbeschichtete Eisenplatte aufgepreßt wird.

Nach der Lehre der GB-A 2 166 666 wird aus einer Schlitzdüse die LCP-Lösung mit 5 m/min gezogen und anschließend 24 Stunden temperiert.

Die JP-A 62-174 227 beschreibt ebenfalls einen aus LCP bestehenden Schichtträger für magnetische Aufzeichnungsträger, der nach der Herstellung längs- und quergereckt wird.

Wie aus diesen Schriften zu entnehmen ist, muß bei der Herstellung von Polyester-Schichtträgern dieser bei definierten thermischen Bedingungen sowohl quer - wie auch längsgereckt werden, um die erforderlichen mechanischen Eigenschaften zu erhalten. Dies bedingt ein enorm kompliziertes und kostspieliges Herstellungsverfahren.

Weitere Nachteile derartiger Schichtträger sind:

- Schwierigkeit bei der Vermeidung von Inhomogenitäten, bedingt unter anderem durch die hohe Viskosität der Polyesterschmelze beim Beguß, insbesondere bei niedrigen Foliendicken.
- Dreidimensionale Folienprofile, insbesondere Dickenschwankungen wegen der komplizierten Herstellung.
- Hoher Verschleiß der Schneidewerkzeuge beim Schneiden der Aufzeichnungsträger auf Gebrauchsbreite.
- Hohe Herstellkosten, da der Schichtträger nach der Herstellung aufgewickelt und geprüft werden muß, um erst dann weiter begossen zu werden.

Deshalb bestand die Aufgabe, ein Verfahren zur Herstellung eines Aufzeichnungsträgers der oben genannten gattungsmäßigen Art zu finden, welches nicht die eben genannten Nachteile hat und bei dem es insbesondere möglich ist, on line mit der Herstellung des Schichtträgers unmittelbar anschließend die gewünschten Beschichtungen mittels bekannter Gießvorrichtungen aufzubringen.

Erfindungsgemäß wurde die Aufgabe gelöst mit einem Verfahren mit den im kennzeichnenden Teil des Anspruchs 1 genannten Merkmalen. Weitere Einzelheiten der Erfindung gehen aus den Unteransprüchen, der Beschreibung und den Zeichnungen hervor.

Im folgenden wird die Erfindung anhand der Zeichnungen näher erläutert und zwar zeigt

| | |
|---|---|
| Figur 1 | eine schematische Darstellung der Anordnung zur Durchführung des erfindungsgemäßen Verfahrens. |
| Figur 2 a/b | die Ausrichtung der für den Schichtträger verwendeten Polymeren gemäß dem Stand der Technik sowie gemäß der Erfindung. |
| Figur 3 | einen Vergleich des Fließverhaltens von Polymeren für den Schichtträger gemäß dem Stand der Technik sowie nach dem erfindungsgemäßen Verfahren. |

Erfindungswesentlich ist, wie weiter unten näher ausgeführt, daß

- der Schichtträger zur Herstellung des Aufzeichnungsträgers im wesentlichen aus einem oder mehreren thermotropen Polymeren, vorzugsweise einem Flüssigkristall-Polyester besteht.
- das verflüssigte thermotrope Polymer bevorzugt in einem Extrudergießer aus einer Schlitzdüse vergossen wird, wobei sich eine gestreckte Konformation der Flüssigkristall-Polymere in Gießrichtung ergibt (Figur 2 b), während konventionelle Thermoplaste ein Polymerknäuel ergeben (Figur 2 a).
- auf den extrudierten und erstarrten Schichtträger on line die Aufzeichnungsschicht oder die Aufzeichnungsschichten, gegebenenfalls auch Rückschichten mittels im übrigen bekannter Gießverfahren aufgebracht werden.
- durch eine geeignete Auswahl der Extrusionsbedingungen, nämlich
  Extrusionstemperatur im Bereich von 240 - 350 °C
  Viskositätsbereich $10^1$ - $10^2$ Pa/s
  Schergefälle $10^1$ - $10^4$ pro s

Austrittsgeschwindigkeit $v_o$ aus der Schlitzdüse Traktionsgeschwindigkeit $v_1$ der Abzugskühlwalze sowie der gegen sie pressenden Andruckwalze im Bereich von 50 - 500 m/min liegt, wobei der Verstreckungsgrad $v_1/v_o$ 2 - 80 beträgt,

die gewünschten Eigenschaften des Schichtträgers wie Schichtdicke, Zugfestigkeit, Wärmedehnung und E-Modul einstellbar bzw. erreichbar sind.

- keinerlei Streck- oder Reckvorgänge bei der Herstellung des Schichtträgers erforderlich sind.

Für das erfindungsgemäße Verfahren eignen sich thermotrope Polymere, insbesondere Polykondensate als Material für den Schichtträger. Als thermotrop (andere Bezeichnungsweise ist mesomorph) bezeichnet man solche Polykondensate, die flüssigkristalline Schmelzen bilden. Der flüssig-kristalline Zustand der Polykondensatschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 μm. Die Untersuchung der flüssig-kristallinen Schmelzen erfolgte nach dem Aufschmelzen der Proben bei Temperaturen zwischen 250 °C und 400 °C. Sofern in diesem gesamten Bereich oder einem Teil davon eine flüssig-kristalline Schmelze beobachtet wird, nennen wir das Polykondensat thermotrop.

Um sicherzustellen, daß die optische Anisotropie der Schmelzen auf einen flüssig-kristallinen Zustand und nicht etwa auf in der Schmelze schwimmende Kristalle des Polykondensats zurückzuführen ist, wurde die Schmelze nach der Messung auf weitere 30 °C über die Untersuchungstemperatur aufgeheizt. Kristalle schmelzen dabei auf, wodurch die optische Anisotropie der Schmelze verschwindet. Nur wenn die Aufhellung der zwischen Nicolschen Prismen beobachteten Schmelze trotz des weiteren Aufheizens nicht verschwand, wurden die Polykondensate als thermostrop eingestuft. Sie zeigten in der Meßanordnung Werte über 1 Skalenteil, meist Werte von 3 bis 90 Skalenteilen. Für amorphe Schmelzen, z. B. aromatische Polycarbonate, wurden dagegen Werte von weniger als 0,1 Skalenteil gefunden.

Die oben beschriebene Methode ist für eine Schnellbestimmung im Labor besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z. B. bei G. W. Gray und P. A. Windsor, "Plastic Crystals, Physico-Chemical Properties and Methods of Investigation", insbesondere Kapitel 3, John Wiley & Sons, New York, Sydney, Toronto 1974 beschrieben ist.

Für das erfindungsgemäße Verfahren in erster Linie geeignete flüssig-kristalline Polykondensate sind thermotrope Polyester. Diese sind in zahlreichen Anmeldungen beschrieben, beispielsweise in den DE-US 3 325 705, 3 325 787, 3 338 805, 3 415 530, 3 542 778, 3 542 813, 3 542 814, 3 542 815, 3 629 208, 3 629 209, 3 629 210, 3 629 211 sowie EP 131 846, 133 024 und 134 959. Ebenso geeignet sind Polythioester, Polyesterimide, beispielsweise bekannt aus der DE 3 516 427, Polyamide, Polyamidimide, wie in der DE 3 542 796 beschrieben, Copolyester, bekannt aus der EP 0 083 426 oder Cholesteringruppen enthaltende Copolyester wie beispielsweise in den EP 0 218 369 und 0 251 688 aufgeführt. Weitere geeignete Polykondensate sind aus den EP 230 550, 249 662 und 261 976 bekannt, um nur einige der für das erfindungsgemäße Verfahren geeignete Polymere beispielhaft zu benennen.

Die vorgenannten Polymere zeichnen sich dadurch aus, wie aus der Figur 3 zu erkennen, daß sie bei Temperaturen von 300 °C und darunter ein außerordentlich günstiges Fließverhalten besitzen, verglichen mit konventionellen Polyestern, wobei die Viskosität vom Schergefälle abhängt und um rund eine Zehnerpotenz niedriger liegt als bei konventionellem Polyester, wodurch außerordentlich günstige Fließeigenschaften beim Extrudieren der Schmelze erzielbar sind.

Die Figur 1 zeigt eine Ausführungsform einer für das erfindungsgemäße Verfahren geeigneten Vorrichtung. In einer beispielsweise elektrisch beheizten Schmelzvorrichtung 1 wird das als Granulat angelieferte flüssig-kristalline Polykondensat aufgeschmolzen und in einer Extrudervorrichtung 2 mittels einer Schneckenfördereinrichtung 3 bei einer Verarbeitungstemperatur von ungefähr 300 °C zu einer Breitschlitzdüse 4 gefördert, aus deren Schlitz die Schmelze nach unten mit einer Geschwindigkeit $v_0$ austritt.

Nach ca. 40 - 60 cm läuft die Schmelze über eine gekühlte Abzugskühlwalze 5, welche das Erstarren der Schmelze bewirkt und gegen die eine Andruckwalze 6 gepresst wird. Die Walzen bewegen sich mit einer Umfangsgeschwindigkeit $v_1$. Durch die Schlitzbreite sowie durch das Verhältnis der Abzugsgeschwindigkeit zur Fördergeschwindigkeit $\frac{v1}{v0}$ wird die Schichtdicke der Trägerfolie 11 geregelt.

Nach Passieren einer Umlenkwalze 7 durchläuft der Schichtträger eine Dickenmeßvorrichtung 8, welche

on line die Förderungsmenge reguliert und auf diese Weise bei konstanter Abzugsgeschwindigkeit auch eine konstante Schichtdicke des Trägers bewirkt. Nach Passieren eines Kompensators 9, der für konstanten Zug des Schichtträgers 11 sorgt, durchläuft dieser einen beidseitigen Gießantrieb 12 und läuft in eine nicht näher dargestellte Begießvorrichtung ein, die den oder die Aufzeichnungsträger aufbringt.

Weder die Art der verwendbaren Begießvorrichtung noch die des Aufzeichnungsträgers unterliegen einer Beschränkung. Es können beispielsweise Extrudergießer, Tauchgießer, Sauggießer, Kaskaden- oder Vorhanggießer oder Abstreifgießer zur Beschichtung des Aufzeichnungsträgers verwendet werden. Der Aufzeichnungsträger kann beispielsweise ein magnetisches oder fotografisches Material sein, beispielsweise ein Magnetband verwendbar für Audio oder Video oder Datenaufzeichnungen, das fotografische Material kann ein Schwarzweißfilm oder ein Colorfilm sein. Er kann eine Aufzeichnungsschicht oder, wie bei Kaskaden- oder Vorhangbegießverfahren üblich, mehrere Schichten, beispielsweise 3 - 12 Schichten gleichzeitig aufeinander gegossen enthalten, weiterhin können mittels aus dem Stand der Technik bekannter Verfahren auch gleichzeitig eine oder mehrere Rückschichten aufgebracht werden.

Vor dem Beguß des Aufzeichnungsträgers können Haftschichten aufgegossen werden, oder es kann eine Corona-Behandlung zur Haftungsverbesserung der aufgegossenen Schicht angewandt werden.

Die Breite des Schichtträgers beim erfindungsgemäßen Verfahren ist beliebig wählbar, beispielsweise 60 cm für Magnetband und rund 110 cm für fotografische Materialien, es können aber auch kleinere oder größere Breiten verwendet werden. Die Durchlauf- und Gießgeschwindigkeit ist wie bei den modernen Gießverfahren üblich wählbar und liegt in etwa im Bereich von 50 - 500 m/min. Wie üblich werden die Aufzeichnungsträger in einem Trockenkanal getrocknet und dann gegebenenfalls zwischen beheizten Walzen geglättet und verdichtet. Anschließend ist es möglich, on line die Aufzeichnungsträger auf Gebrauchsbreite in üblichen Trennmaschinen zu schneiden wie beispielsweise auf 35 mm, 3,81 mm oder 6,24 mm und anschließend zu konfektionieren, also zur Verwendung als Magnetband in Cassetten oder fotografischem Film in Spulen.

Aus dem vorstehend Gesagten wird deutlich, daß auf diese Weise mittels des erfindungsgemäßen Verfahrens auf äußerst rationelle Weise in einem Arbeitsgang Schichtträger hergestellt, mit Aufzeichnungsschichten versehen und der Aufzeichnungsträger in den gebrauchsfertigen Zustand gebracht werden kann, wobei eine hervorragende Qualität erzielt wird, Zwischenlager- und -prüfkosten erspart und in einfacher Weise das Endprodukt hergestellt werden kann.

Anhand einiger Beispiele wird nun die Erfindung näher beschrieben, wobei die Beispiele lediglich der Erläuterung dienen, ohne die Erfindung darauf zu beschränken.

Beispiel 1

Ein thermotropes Polyester-Granulat gemäß DE-OS 3 325 787, Beispiel 3, wurde bei 280 °C aufgeschmolzen. Die Viskosität betrug 600 Pa/s bei einer Schergeschwindigkeit von $10^3$/s. Die Schmelze wurde durch eine Breitschlitzdüse mit einer Gießbreite von 650 mm und einer Schlitzweite von 80 µm mit einer Austrittsgeschwindigkeit von 40 m/min extrudiert, lief über eine Abzugskühlwalze von 600 mm Durchmesser, welche die erstarrte Folie auf eine Geschwindigkeit von etwa 400 m/min brachte. Die erzielte Dicke des Schichtträgers betrug 8 µm. Nach Durchlaufen eines 20 m langen Kompensators wurde in einem Extrudergießer mit einer Gießbreite von 635 mm eine magnetische Dispersion mit folgender Zusammensetzung auf den Schichtträger gegossen: 737 Teile nadelförmiges $CrO_2$ mit 39,8 kA/m Koerzitivkraft, 25 Teile Vinylidenchlorid/Acrylnitril-Mischpolymerisat, 23 Teile Lecithin, 580 Teile Tetrahydrofuran und 209 Teile Cyclohexanon, 106 Teile Polyesterurethan, 534 Teile Tetrahydrofuran, 4 Teile Fettsäure, 9 Teile Butylstearat, 15 Teile einer 75%igen Lösung eines Vernetzers (Desmodur L der Bayer AG), 0,2 Teile Eisenacetylacetonat.

Die Dispersion wurde in einem Magnetfeld in Gießrichtung ausgerichtet, getrocknet und bei einem Liniendruck von 80 kp/cm kalandriert. Die Trockenschichtdicke betrug 3 µm.

Anschließend wurde der so erhaltene magnetische Aufzeichnungsträger in 6,24-mm(1/2")-Streifen getrennt und in eine VHS-Videocassette konfektioniert.

Der so erhaltene magnetische Aufzeichnungsträger hatte hervorragende elektroakustische und mechanische Eigenschaften, beispielsweise war der Skew-Fehler wesentlich niedriger als bei einem Videoband, welches auf einen gleichdicken, konventionellen Polyester-Schichtträger vergossen war, ebenso waren die Wickel-und Laufeigenschaften des nach dem erfindungsgemäßen Verfahren hergestellten Videobandes gegen den Stand der Technik deutlich verbessert.

Beispiel 2

Ein thermotropes PE-Granulat gemäß DE-OS 3 415 530, Beispiel 5, wurde bei 295 °C aufgeschmolzen und über eine Breitschlitzdüse mit 0,5 mm Schlitzbreite in einer Gießbreite von 140 cm extrudiert, in einer Kühlwalze erstarrt und bei einer Schichtdicke von 170 µm bei einer Geschwindigkeit von 150 m/min über einen Kompensator gemäß Beispiel 1 in eine Corona-Behandlungsstrecke, wie beispielsweise in DE 3 631 584 beschrieben, gebracht und beidseitig zur Verbesserung der Haftung für den Aufzeichnungsträger vorbehandelt. Anschließend wurden mit Hilfe zweier Schlitzgießer bei einer Gießbreite von 135 cm beidseitig folgende fotografische Röntgenfilm-Zusammensetzungen aufgegossen: 100 Teile Silberbromidjodidemulsion mit einer mittleren Korngröße von 2,5 µm und einer Deckkraft von 60, 200 Teile Gelatine, 10 Teile Saponin als Netzmittel, 5 Teile Mucochlorsäure als Härtungsmittel. Der Silberauftrag betrug beiderseits 3,7 g Ag.

Die so erhaltene Aufzeichnungsschicht lief durch einen Schwebedüsentrockner und wurde dann auf Gebrauchsformat geschnitten. Fotografischen und mechanischen Eigenschaften wie Maßhaltigkeit sowie die Gußgleichmäßigkeit waren hervorragend.

Beispiel 3

Ein thermotropes vernetzbares Polyestergranulat gemäß EP 0 249 662, Beispiel 3, wurde bei 256 °C aufgeschmolzen und mittels einer Schlitzdüse in einer Breite von 114 cm bei einer Schlitzweite von 300 µm extrudiert, in einer Kühlwalzenanordnung auf 200 m/min Geschwindigkeit bei einer Dicke des Schichtträgers von 125 µm gebracht. In einem Mehrfach-Kaskadengießer wurden in zwei Gießdurchgängen folgende fotografische Schichten in der angegebenen Reihenfolge für ein Colorumkehrfilm-Material aufgebracht:

Die Mengenangaben beziehen sich jeweils auf 1 m². Für den Silberhalogenidauftrag werden die entsprechenden Mengen $AgNO_3$ angegeben.

Schicht 1 (Antihaloschicht)
schwarzes kolloidales Silbersol mit 1,5 g Gelatine und 0,33 g Ag

Schicht 2 (Zwischenschicht)
0,6 g Gelatine

Schicht 3 (1. rotsensibilisierte Schicht)
rotsensibilisierte Silberbromidiodidemulsion (3,5 mol-% Iodid; mittlerer Korndurchmesser 0,22 µm) mit 0,98 g $AgNO_3$, 0,81 g Gelatine und 0,46 mmol Blaugrünkuppler der Formel

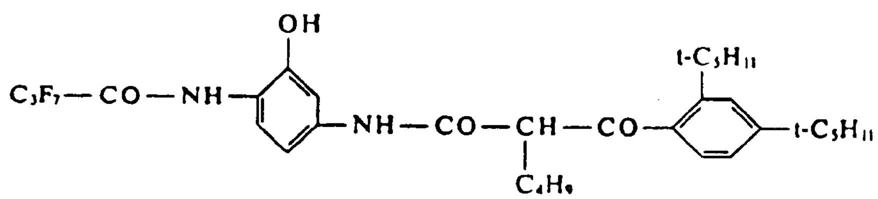

Schicht 4 (2. rotsensibilisierte Schicht)
rotsensibilisierte Silberbromidiodidemulsion (4,8 mol-% Iodid; mittlerer Korndurchmesser 0,6 µm) mit 0,85 g $AgNO_3$, 0,7 g Gelatine und 1,04 mmol des in Schicht 3 enthaltenen Blaugrünkupplers

Schicht 5 (Zwischenschicht)
2 g Gelatine und 0,15 g 2,5-Diter tiäroctylhydrochinon

Schicht 6 (1. grünsensibilisierte Schicht)
grünsensibilisierte Silberbromidiodidemulsion (4,3 mol-% Iodid; mittlerer Korndurchmesser 0,28 µm) mit 0,85 g $AgNO_3$, 0,75 g Gelatine und 0,43 mmol Purpurkuppler der Formel

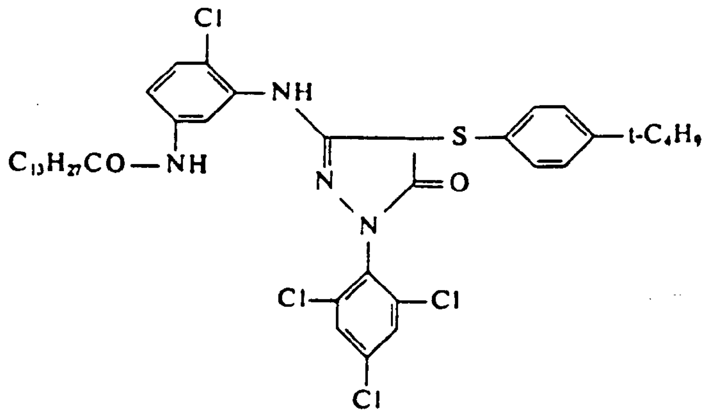

Schicht 7 (2. grünsensibilisierte Schicht)
grünsensibilisierte Silberbromidiodidemulsion (3,8 mol-% Iodid; mittlerer Korndurchmesser 0,62 µm) mit 1,03 g $AgNO_3$, 0,89 g Gelatine und 0,91 mmol des in Schicht 6 enthaltenen Purpurkupplers

Schicht 8 (Zwischenschicht)
1,2 g Gelatine und 0,12 g 2,5-Ditertiäroctylhydrochinon

Schicht 9 (Gelbfilterschicht)
gelbes kolloidales Silbersol mit 0,2 g Ag und 0,9 g Gelatine

Schicht 10 (1. blausensibilisierte Schicht)
blausensibilisierte Silberbromidiodidemulsion (4,9 mol-% Iodid; mittlerer Korndurchmesser 0,36 µm) mit 0,76 g $AgNO_3$, 0,56 g Gelatine und 0,53 mmol Gelbkuppler der folgenden Formel

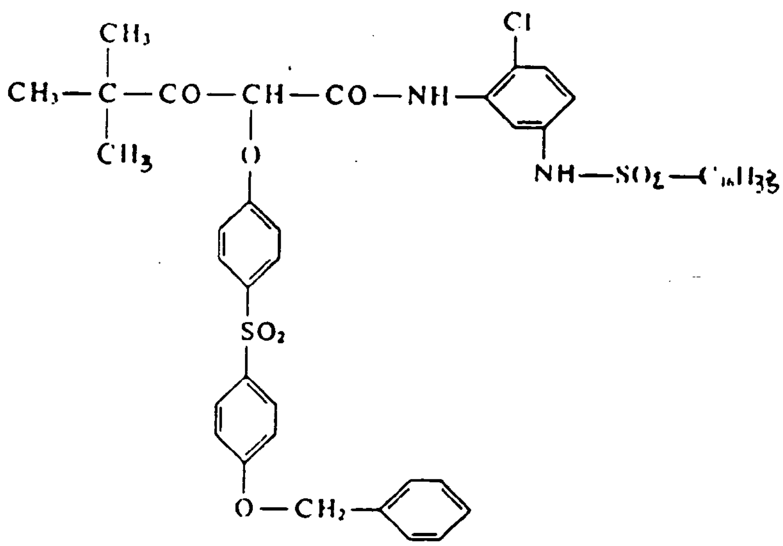

Schicht 11 (2. blausensibilisierte Schicht)
blausensibilisierte Silberbromidiodidemulsion (3,3 mol-% Iodid; mittlerer Korndurchmesser 0,78 µm) mit 1,30 g $AgNO_3$, 0,76 g Gelatine und 1,62 mmol des in Schicht 10 enthaltenen Gelbkupplers

Schicht 12 (Schutzschicht)
1,2 g Gelatine

Schicht 13 (Härtungsschicht)
1,5 g Gelatine und 0,7 g Härtungsmittel der folgenden Formel

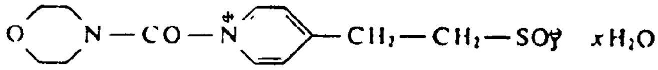

Der so hergestellte fotografische Aufzeichnungsträger wurde auf 35 mm Breite getrennt sowie als Planfilm konfektioniert. In jedem Fall wurden überragende mechanische und fotografische Eigenschaften erhalten.

Zusammengefaßt bietet das erfindungsgemäße Verfahren folgende Vorteile gegenüber den bisher bekannten:

- Festigkeit, E-Modul und Zähigkeit der hergestellten Aufzeichnungsträger sind etwa 3fach höher, die Wärmedehnung beträgt nur ca. 10 %, verglichen mit einem Material, welches auf einen konventionellen Polyester-Schichtträger gegossen wird.
- Die Homogenität und Sauberkeit des Schichtträgers ist wesentlich verbessert, die Abriebeigenschaften sind markant besser.
- Die exakte Längsausrichtung der Moleküle in Gießrichtung kompensiert die von den höheren Festigkeitswerten zu erwartenden Schneidprobleme.
- Der E-Modul quer zur Gießrichtung ist kleiner als der E-Modul in Herstellrichtung, wodurch die Schmiegsamkeit auch bei niedrigen Schichtträgerdicken (< 10 µm) begünstigt wird.
- Es sind bei der Herstellung des Schichtträgers keinerlei Reck- oder Streckvorgänge erforderlich, vielmehr kann sofort das Aufzeichnungsmaterial begossen und weiterverarbeitet werden.

## Patentansprüche

1. Verfahren zur Herstellung eines Aufzeichnungsträgers, bestehend aus einem flexiblen bandförmigen Schichtträger sowie einer oder mehreren darauf gegossenen fotografischen oder magnetischen Schichten sowie gegebenenfalls einer oder mehreren Schichten auf der anderen Seite des Schichtträgers, wobei der Schichtträger im wesentlichen aus einem oder mehreren thermotropen Polymeren besteht, ausgewählt aus thermotropen Polyester, Polythioester, Polyesteramid, Polyesteramidimid und/oder Polyestercarbonat, dadurch gekennzeichnet,
   - daß der Schichtträger nach Extrudieren des verflüssigten thermotropen Polymers bei einem Temperaturbereich von 240 - 350 °C, einem Viskositätsbereich $10^1$ - $10^2$ Pa/s bei einem Schergefälle von $10^1$ - $10^4$ pro s aus einer Schlitzdüse mit einer Austrittsgeschwindigkeit $v_0$ zwischen einer mit der Traktionsgeschwindigkeit $v_1$ laufenden Abzugskühlwalze sowie einer gegen diese pressenden sich drehenden Andruckwalze durchläuft, zu einem Verhältnis von $v_1/v_0$ von 2 - 80 gestreckt und so auf die erforderliche Schichtdicke gebracht wird
   - wobei unmittelbar nachfolgend on-line mittels entsprechender Gießvorrichtung auf die Vorder- und/oder Rückseite eine Haftschicht und/oder eine oder mehrere fotografische Schichten und/oder eine oder mehrere Magnetschichten und/oder eine oder mehrere Rückseitenschichten gegossen werden.

## Claims

1. A process for the production of a recording medium, consisting of a flexible tape-like substrate and one or more photographic or magnetic layers cast thereon and, if required, one or more layers on the other side of the substrate, the substrate essentially consisting of one or more thermotropic polymers selected from thermotropic polyesters, polythioesters, polyesteramides, polyesteramideimides and/or polyestercarbonates, wherein, after extrusion of the liquefied thermotropic polymer at 240-350°C, in a viscosity range of $10^1$-$10^2$ Pa/s at a shear gradient of $10^1$-$10^4$ per s, from a slot die at an outlet velocity $v_0$, the substrate passes between a take-off cooling roller operating at the traction velocity $v_1$ and a rotating pressure roller pressing against said take-off roller and is stretched at a ratio $v_1/v_0$ of 2-80 and thus brought to the required layer thickness,
   an adhesion-promoting layer and/or one or more photographic layers and/or one or more magnetic layers and/or one or more backing layers being cast on-line immediately thereafter by means of an appropriate casting apparatus onto the front and/or back.

## Revendications

1. Procédé de fabrication d'un support d'enregistrement, composé d'une support de couche se présentant sous forme d'une bande flexible, ainsi que d'une ou plusieurs couches photographiques ou magnétiques, coulées dessus, ainsi que, le cas échéant, d'une ou plusieurs couches réalisées de l'autre côté du support de couche, le support de couche étant composé essentiellement d'un ou plusieurs polymères thermotropes, sélectionnés à partir de produits thermotropes dont un polyester, un polythioester, un polyesteramide, un polyesteramidimide et/ou un carbonate de polyester, caractérisé en ce que,

- après extrusion du polymère thermotrope liquéfié, dans une plage de température allant de 240 à 350°C, une plage de viscosité allant de $10^1$ à $10^2$ Pa.s, avec un gradient de cisaillement allant de $10^1$ à $10^4$ par seconde, à partir d'une buse à fente et à une vitesse de sortie $v_o$, le support de couche passe entre un rouleau de refroidissement-traction, donnant une vitesse de traction $v_1$, ainsi qu'un rouleau de pressage, tournant en exerçant une pression contre celui-ci, avec un rapport $v_1/v_o$ compris dans la plage allant de 2 à 80, et est ainsi porté à l'épaisseur de couche nécessaire,
- une couche adhésive et/ou une ou plusieurs couches photographiques et/ou une ou plusieurs couches magnétiques et/ou une ou plusieurs couches de verso étant coulées directement ensuite, en ligne, au moyen d'un dispositif de coulée correspondant, sur le recto et/ou le verso.

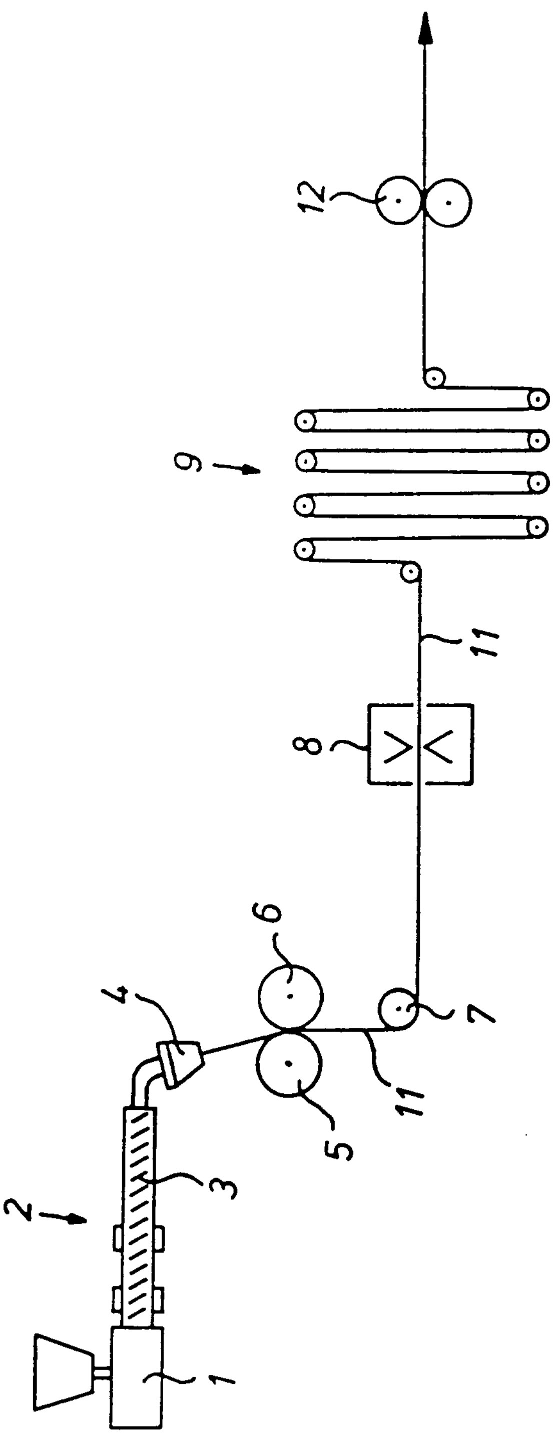


FIG. 1

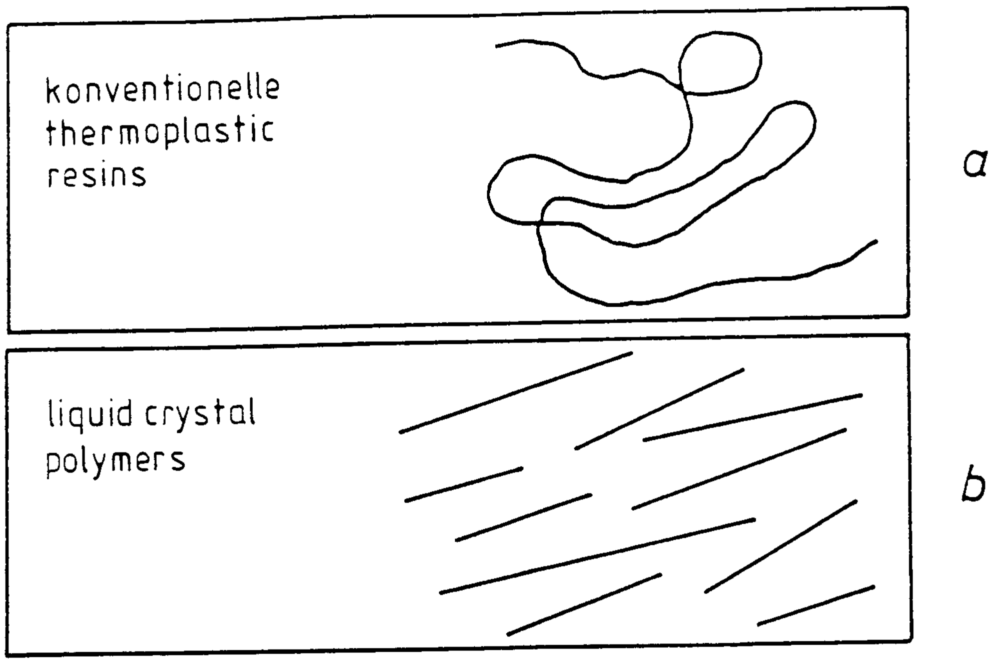
konventionelle thermoplastic resins
a
liquid crystal polymers
b

FIG. 2

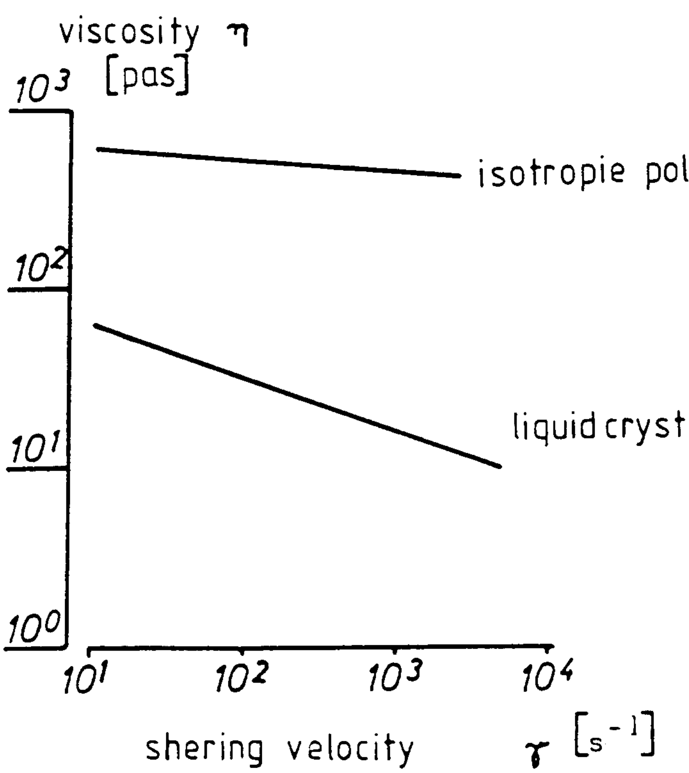
viscosity η [pas]
10³
10²
10¹
10⁰
isotropie polyester
liquid crystal polyester
10¹
10²
10³
10⁴
shering velocity γ [s⁻¹]

FIG. 3